# EUROPEAN PATENT APPLICATION

(11) **EP 3 142 118 A1**
(43) Date of publication of application: **15.03.2017**
(21) Application number: 15382446.1
(22) Date of filing: 10.09.2015
(51) Int. Cl.: G11B 27/10, G11B 27/30, H04N 21/242, H04N 21/43

(54) **SYNCHRONIZING AUDIO AND VIDEO COMPONENTS OF AN AUDIO-VISUAL TRANSMISSION SIGNAL**

(71) Applicant: Solsona Sagrado, Luis, 28007 Madrid (ES); Solsona Sagrado, Gabriel, 28941 Fuenlabrada (ES); Solsona Sagrado, Juan Manuel, 88479 Neubiberg (DE)
(72) Inventor: Solsona Sagrado, Luis, 28007 Madrid (ES); Solsona Sagrado, Gabriel, 28941 Fuenlabrada (ES); Solsona Sagrado, Juan Manuel, 88479 Neubiberg (DE)
(74) Representative: ZBM Patents - Zea, Barlocci & Markvardsen

(57) **Abstract**

A method is disclosed of providing reference audio and raster image signals for inclusion in an audio-visual transmission signal in such a way as the components of the audio-visual transmission signal to be automatically synchronized. The method comprises: generating the reference audio signal comprising audio sequences each representing a unique identifier from a series of unique identifiers; generating the reference raster image signal comprising raster image frames each representing the unique identifier, respectively, in such a way as to be bijectively associated with the reference audio sequences; and providing the reference audio and raster image signals in such a way that each of the reference audio sequences substantially coincide with the respective bijectively associated reference raster image frame. A method of automatically synchronizing the components of an audio-visual transmission signal by using such reference signals is provided. Systems and computer programs are disclosed which are suitable for performing said methods.

## Description

The present disclosure relates to audio-visual transmissions and, more specifically, to synchronization of audio and video components of audio-visual transmission signals at audio-visual transmission chains.

### BACKGROUND ART

An audio-visual transmission signal may be a broadcasting signal or a streaming signal.

An audio-visual transmission signal may comprise several components, such as e.g. one or more audio components and one video component. The audio and video components of an audio-visual transmission signal may become desynchronized due to e.g. the different intermediate processes by which the components are processed and/or to the different paths that the components may follow. Hence, synchronization of audio-visual transmission components is usually required at given points of a corresponding audio-visual transmission chain.

The most known way of synchronizing the components of an audio-visual transmission signal emerged with the appearance of the first film with synchronized dialogue. This system has been kept on until now without any substantial modification. This system, called clapboard, is based on hitting suddenly two wooden slats attached at one end by a shaft, so as to produce a sound pulse that visually relates to the moment of impact between the slats. This sound pulse and related image of the impact between slats are captured by a camera with microphone, such that said captured image and sound are included in the audio-visual transmission signal to be synchronized. Then, at a given point of the audio-visual transmission chain, an operator may manually shift the audio and video components relative to each other until the captured sound and image of the impact between the slats of the clapboard are substantially aligned in time. Once this alignment is achieved, it is considered that the audio and video components of the audio-visual transmission signal are synchronized.

Later, 'electronic' synchronization test signals were started to be used for synchronizing the components of an audio-visual transmission signal. An 'electronic' synchronization test signal comprises a plurality of frames including a key frame which is different from the other frames in that the key frame contains a distinctive image, such as e.g. a basic geometrical figure as a cross, a completely white image, etc. This key frame constitutes a reference image to be associated with the sudden interruption of a continuous audio signal, such as a tone, or a transient signal with a duration less than one video frame. An operator may process the 'electronic' synchronization test signal and the other (audio or transient) signal in a similar manner to that described above (with respect to signals generated from the traditional clapboard) for synchronizing the components of the audio-visual transmission signal.

However, none of the previous prior art systems or techniques permits an automatic or unattended correction of the timing misalignment between the audio and video components of an audio-visual transmission signal. Therefore, manual measures and actions are required which may cause delays, overruns, errors, etc. Besides, the entire audio-visual transmission chain has to wait for the completion of this manual event sync procedure, which makes the above prior art techniques rather useless in live production procedures, rush productions like News Gathering or large format events.

Furthermore, the electronic sync test signal is injected at an intermediate point of the end-to-end audio-visual transmission chain, i.e. the electronic sync test signal is not generated at the true origin of the end-to-end audio-visual transmission chain. Most of the audio-video timing misalignments occur at said not covered area or path (between capture and production of the electronic signal). Thus, the synchronization of audio and video components by using the electronic sync test signal may be considered not reliable enough.

None of the discussed prior art systems/techniques are able to generate frame by frame a continuously useful signal for synchronizing the components of an audio-visual transmission signal. Synchronization cycles may have a period of e.g. about 4 seconds, which in terms of frames may mean that only 1 frame among 100 frames is useful while the remaining 99 frames are useless. Said useful frame would correspond to the one including an image of the impact between slats of a prior art clapboard or a distinctive image (a cross, e.g.) included in a prior art electronic synchronization test signal.

It is an object of the present disclosure to improve the existing methods and systems for synchronizing the components of an audio-visual transmission signal.

### SUMMARY

In a first aspect, a method is disclosed of providing a reference audio signal and a reference raster image signal for inclusion in an audio-visual transmission signal, in such a way as an audio component and a video component of the audio-visual transmission signal to be automatically synchronized at an end-to-end audio-visual transmission chain.

The method comprises generating the reference audio signal comprising one or more reference audio sequences each including an audio representation of a unique identifier from a series of unique identifiers. The method further comprises generating the reference raster image signal comprising one or more reference raster image frames each including a raster image representation of the unique identifier, respectively, in such a way as to be bijectively associated with the one or more reference audio sequences. The method still further comprises providing the reference audio signal and the reference raster image signal in such a way that each of the reference audio sequences substantially coincide with the respective bijectively associated reference raster image frame.

A raster image frame may be defined as a data structure representing a still image configured to be rasterized or scanned on a screen or a display. A raster image frame may be a video frame when it is configured according to any of the standard video formats. Otherwise it may not be a video frame. A raster image signal may be defined as a digital signal carrying one or more raster image frames.

An aspect of the proposed method is that it may permit a fully automatic synchronization of the audio and video components of an audio-visual transmission signal when the generated reference audio signal and reference raster image signal are suitably included in the audio-visual transmission signal. Since intervention of a human being is not required, such synchronization may thus result more reliable, faster and cheaper by using the proposed method in comparison with the prior art methods.

In some implementations, the one or more reference audio sequences may be a series of reference audio sequences having predetermined positions, and the unique identifier represented in each of the reference audio sequences may be the position of the reference audio sequence in the series of reference audio sequences. Furthermore, the one or more reference raster image frames may be a series of reference raster image frames having predetermined positions, and the unique identifier represented in each of the reference raster image frames may be the position of the reference raster image frame in the series of reference raster image frames.

An aspect of this last feature is that, when synchronizing the audio-visual transmission signal, the chances of detecting a successful matching between unique identifiers respectively represented in the reference signals may be greater. If a particular unique identifier fails, i.e. matching is not possible, new attempts of matching may be undertaken because other unique identifiers are represented in the reference signals. The proposed method may thus be more reliable with such approach based on having more than one unique identifier respectively represented in the reference signals.

In some examples, providing the reference audio signal and the reference raster image signal may comprise reproducing the reference audio signal and the reference raster image signal in an audio-visual device. The reproduced reference audio signal and reference raster image signal may be captured by a capturing device (e.g. camera with microphone) configured to generate the audio-visual transmission signal including the captured reference audio signal and reference raster image signal. The captured reference raster image signal may thus be included in the audio-visual transmission signal in the form of a video signal.

An aspect of this last feature may be that it may allow generation of the reference signals and their inclusion in the audio-visual transmission signal at the true origin of the end-to-end audio-visual transmission chain. Most of the audio-video misalignments may occur between capture and production of the audio-visual transmission signal. Hence, the proposed provision of the reference signals so as to be included in the audio-visual transmission signal at the generation point thereof may permit a more reliable synchronization of the components of the audio-visual transmission signal.

In some implementations of the method, the audio-visual device may comprise a loudspeaker and a display having a first region (e.g. upper region) and a second region (e.g. lower region), and
reproducing the reference audio signal and the reference raster image signal may comprise, for each pair formed by a first reference raster image frame and an immediately subsequent reference raster image frame in the series of reference raster image frames:
a first and a second rasterization of the first reference raster image frame on one of the first and second regions of the display, and a single reproduction of its bijectively associated reference audio sequence through the loudspeaker, and
a first and a second rasterization of the immediately subsequent reference raster image frame on the other of the first and second regions of the display, and a single reproduction of its bijectively associated reference audio sequence through the loudspeaker; wherein
the first rasterization of the first reference raster image frame may be performed substantially simultaneously with the single reproduction of its bijectively associated reference audio sequence,
the first rasterization of the immediately subsequent reference raster image frame may be performed substantially simultaneously with the single reproduction of its bijectively associated reference audio sequence, and
the second rasterization of the first reference raster image frame may be performed substantially simultaneously with the first rasterization of the immediately subsequent reference raster image frame.

As described in detail in other parts of the present disclosure, this last feature(s) may permit a full scan by a capturing device (e.g. camera) of the reference raster image frames, even in the case the scanning by the camera is started after the initiation of the rasterization of the reference frame on the screen or display of the audio-visual device. This may permit the synchronization of the components of an audio-visual transmission signal with an increased reliability.

In some examples, the rasterizations of the reference raster image frames may be performed with a rasterization frequency at least 32 times greater than a scanning frequency of the capturing device. This feature may permit a complete capture (without loss of image data) of the rasterized reference frame as if it were a still image. This may thus permit the synchronization of the components of an audio-visual transmission signal with increased reliability.

Alternatively to the examples based on reproducing the reference signals so as to be captured by a camera, the reference raster image signal may be a reference video signal and the reference raster image frames may be reference video frames. Thus, providing the reference audio signal and the reference raster image signal may comprise transmitting the reference audio signal and the reference video signal to the audio-visual transmission chain in such a way that the reference audio signal and the reference video signal are included in the audio-visual transmission signal.

In some examples, the reference audio signal may be a continuous pseudo random audio signal. With this type of audio signal, the audio sequences are detectable in very noisy environments. Hence, the quality of the reference audio sequences may be higher, so the synchronization of the components of an audio-visual transmission signal may be performed in better conditions.

In some implementations, each of the reference audio sequences may comprise quantified characteristics uniquely identifying the reference audio sequence. Furthermore, the audio representation of the unique identifier included in each of the reference audio sequences may be implemented via a data structure or an algorithm defining an equivalence between the quantified characteristics of the reference audio sequence and the unique identifier.

In some examples, each of the reference raster image frames may comprise redundant data for recovering at least part of its raster image representation of the unique identifier in case of data corruption. This may improve the quality of the reference raster image frames, since lost and/or corrupted data may be recovered at any point of the audio-visual transmission chain when needed. Hence, the components of an audio-visual transmission signal may be synchronized in a more reliable manner when such reference raster image frames with redundant data are used.

In a second aspect, a method is provided of automatically synchronizing an audio component and a video component of an audio-visual transmission signal at an end-to-end audio-visual transmission chain, the audio-visual transmission signal including a reference audio signal and a reference raster image signal provided according to any of the previous methods.

This "synchronization" method comprises receiving the audio-visual transmission signal, and determining, in the reference audio signal included in the audio-visual transmission signal, a reference audio sequence including an audio representation of a unique identifier from a series of unique identifiers. The method further comprises determining, in the reference raster image signal included in the audio-visual transmission signal, a reference raster image frame including a raster image representation of the unique identifier. The method still further comprises determining a time difference between a start of the determined reference audio sequence and a start of the determined reference raster image frame, or between an end of the determined reference audio sequence and an end of the determined reference raster image frame.

In some examples, the "synchronization" method may further comprise shifting the audio component and/or the video component relative to each other to offset the determined time difference.

In a third aspect, a system configured to perform the method of providing a reference audio signal and a reference raster image signal is further provided.

In a fourth aspect, a system configured to perform the method of automatically synchronizing an audio component and a video component of an audio-visual transmission signal is also provided.

In a fifth aspect, a computer program product is provided comprising program instructions to provoke a computing system to perform the method of providing a reference audio signal and a reference raster image signal.

In a sixth aspect, a computer program product is provided comprising program instructions to provoke a computing system to perform the method of automatically synchronizing an audio component and a video component of an audio-visual transmission signal.

Any of said computer program products may be embodied on a storage medium (for example, a CD-ROM, a DVD, a USB drive, on a computer memory or on a read-only memory) or carried on a carrier signal (for example, on an electrical or optical carrier signal).

The computer program product may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Non-limiting examples of the present disclosure will be described in the following, with reference to the appended drawings, in which:
Figure 1 is a block diagram schematically illustrating a system for providing a reference audio signal and a reference raster image signal according to an example;
Figure 2 is a block diagram schematically illustrating a system for providing a reference audio signal and a reference video signal according to a further example;
Figure 3 is a schematic illustration of the reproduction of a reference audio signal and a reference raster image signal in an audio-visual device according to examples;
Figure 4 is a block diagram schematically illustrating a system for automatically synchronizing an audio component and a video component of an audio-visual transmission signal according to an example; and
Figure 5 is a flow chart schematically illustrating a method of providing a reference audio signal and a reference raster image signal according to an example.

### DETAILED DESCRIPTION OF EXAMPLES

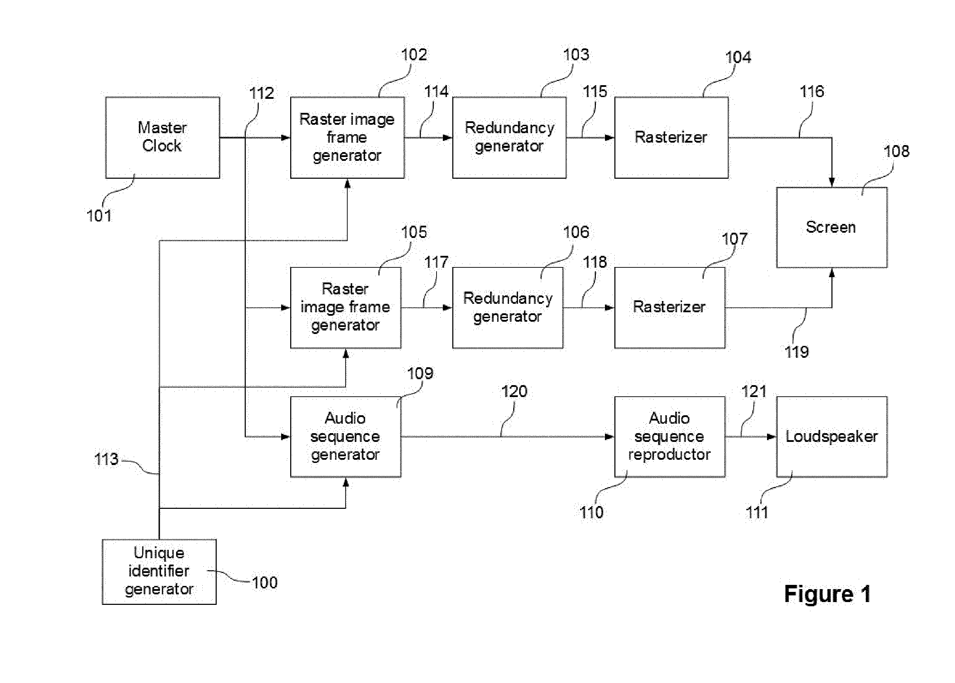

Figure 1 is a block diagram schematically illustrating a system for providing a reference audio signal and a reference raster image signal according to an example. A unique identifier generator 100 may have the function of generating a series of unique identifiers 113 such as e.g. the series 1, 2, 3, 4, 5, and so on.

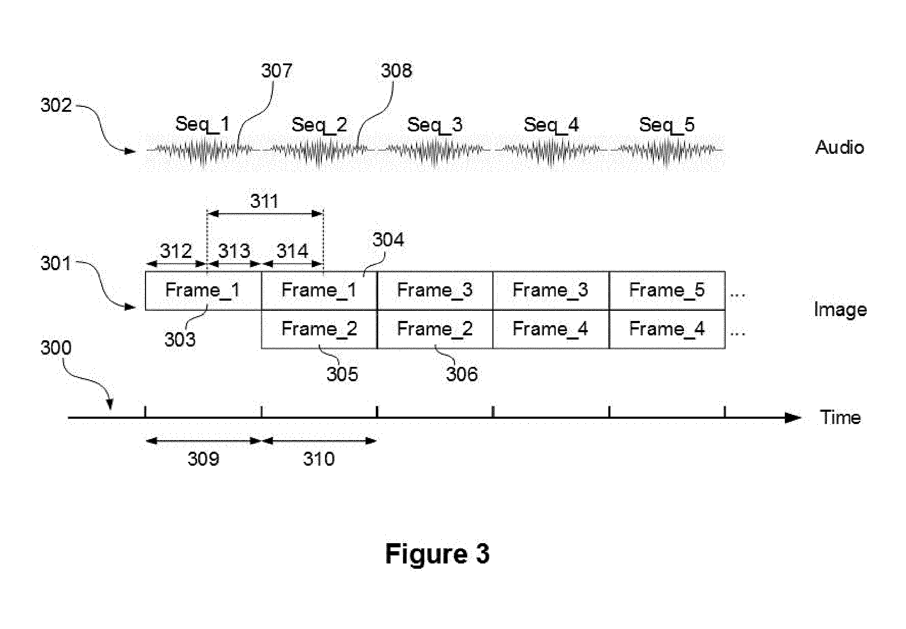

A first raster image frame generator 102 and a second raster image frame generator 105 may be configured to receive each of the unique identifiers 113, and to generate reference raster image frames 114, 117 to be rasterized on a screen 108 in a synchronized manner similar to that illustrated in Figure 3, for example.

The first raster image frame generator 102 may generate, for each odd unique identifier 113 (1, 3, 5, and so on), a reference raster image frame 114 including a representation of the odd unique identifier 113.

The second raster image frame generator 105 may generate, for each even unique identifier 113 (2, 4, 6,and so on), a reference raster image frame 117 including a representation of the even unique identifier 113.

Each of the reference raster image frames 114, 117 may comprise e.g. an array of cells each representing a binary value. For example, each of the cells may have two possible colours, e.g. black and white, wherein black may mean one (bit = 1) and white may mean zero (bit = 0).

With respect to odd unique identifiers, a first reference raster image frame 114 may be generated (by the raster image frame generator 102) including a representation of the unique identifier 1 (one or first) with an array of cells including one rightmost black cell (bit = 1) and white cells (bit = 0) to the left of the black cell. Similarly, a third reference raster image frame 114 may be generated including a representation of the unique identifier 3 (three or third) with an array of cells including two rightmost black cells (bit = 1) and white cells (bit = 0) to the left of the black cells. And so on.

With respect to even unique identifiers, a second reference raster image frame 117 may be generated (by the raster image frame generator 105) including a representation of the unique identifier 2 (two or second) with an array of cells including one second rightmost black cell (bit = 1), one white cell (bit = 0) to the right of the black cell, and white cells (bit = 0) to the left of the black cell. A fourth reference raster image frame 117 may be generated including a representation of the unique identifier 4 (four or fourth) with an array of cells including a third rightmost black cell (bit = 1), two white cells (bit = 0) to the right of the black cell, and white cells (bit = 0) to the left of the black cell. And so on.

Alternatively to the above binary representations in the form of arrays of black and white cells, other approaches may be used for representing the unique identifiers 113 in the reference raster image frames 114, 117. For example, QR codes or bar codes could be used instead of said black and white binary representation.

A first redundancy generator 103 may be configured to receive each of the odd reference raster image frames 114 from the first reference raster image frame generator 102. The first redundancy generator 103 may be further configured to generate "enriched" reference raster image frames 115 by including redundant data in the odd frames 114 for recovering purposes in case of data corruption.

A second redundancy generator 106 may be configured to receive each of the even reference raster image frames 117 from the second reference raster image frame generator 105. The second redundancy generator 106 may be further configured to generate "enriched" reference raster image frames 118 by including redundant data in the even frames 117 for recovering purposes in case of data corruption.

Both redundancy generators 103, 106 may be based on a Reed-Solomon algorithm or similar Error Correcting Code algorithm, for example.

A first rasterizer 104 may be configured to receive the enriched odd reference raster image frames 115 from the first redundancy generator 103. The first rasterizer 104 may be further configured to generate suitable raster signals 116 for rasterizing the enriched odd reference raster image frames 115 on an upper region of the screen 108 in a synchronized manner similar to that shown in Figure 3, for example.

A second rasterizer 107 may be configured to receive the enriched even reference raster image frames 118 from the second redundancy generator 106. The second rasterizer 107 may be further configured to generate suitable raster signals 119 for rasterizing the enriched even reference raster image frames 118 on a lower region of the screen 108 in a synchronized manner similar to that shown in Figure 3, for example.

A reference audio sequence generator 109 may be configured to receive each of the unique identifiers 113 from the unique identifier generator 100 and to generate reference audio sequences 120 each including an audio representation of the corresponding unique identifier 113. Said audio representation may be generated by using e.g. an algorithm (or a data structure, such as a lookup table) defining an equivalence relation between quantified characteristics of the reference audio sequence 120 and the unique identifier 113.

For example, a set of maximum length sequences (MLSs) may be generated by using two linear bit shift registers (LFSR), one of them with a fixed seed and the other with a seed connected with the corresponding unique identifier 113. The linear combination of the two LFSRs may create different MLSs that bijectively associate with the unique identifiers.

An audio sequence reproductor 110 may be configured to receive the reference audio sequences 120 and converting them to suitable audio reproduction signals 121. This conversion may be performed by generating a maximum positive amplitude of the audio wave (e.g. +1.0V) for each binary value equal to 1 (in the reference audio sequence 120), and a maximum negative amplitude of the audio wave (e.g. -1.0V) for each binary value equal to 0 (in the reference audio sequence 120). These audio signals 121 may be reproduced through a loudspeaker 111 in a synchronized manner similar to that shown by Figure 3, for example.

A master clock 101 may have the function of generating clock signals 112 aimed at properly synchronizing the operation of the first raster image frame generator 102, the second raster image frame generator 105, and the audio sequence generator 109. Such synchronization may cause the reproduction of reference raster image frames and reference audio sequences in a synchronized manner similar to that illustrated by Figure 3.

The reproduction of the reference raster image frames and reference audio sequences may be captured by e.g. a camera with microphone. Once captured, the reference raster image frames and reference audio sequences may be included by the camera in an audio-visual transmission signal to be synchronized. The captured reference raster image frames may be included in the audio-visual transmission signal in the form of a video signal compatible with the video component of the audio-visual transmission signal.

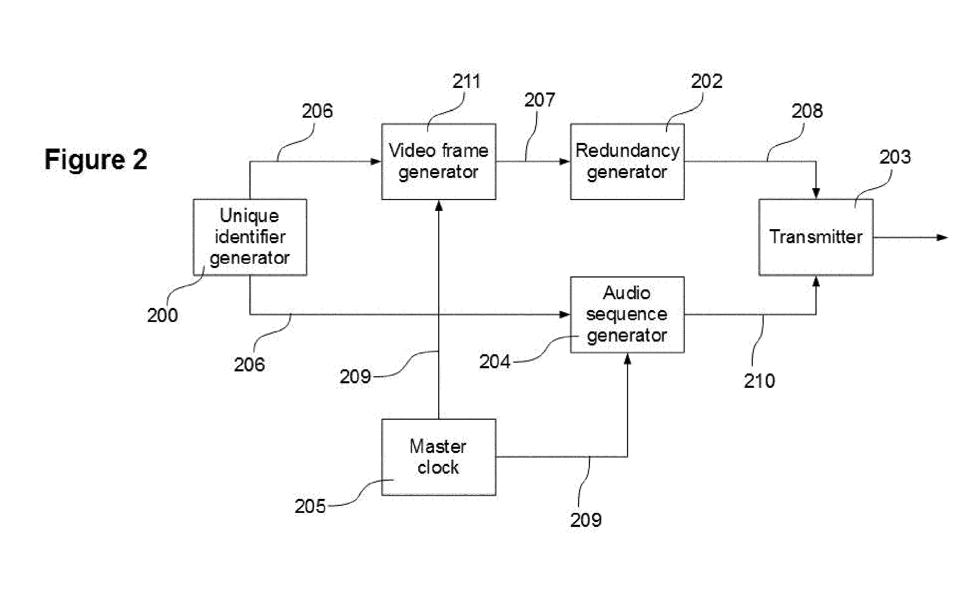

Figure 2 is a block diagram schematically illustrating a system for providing a reference audio signal and a reference video signal according to a further example. A unique identifier generator 200 may have the function of generating a series of unique identifiers 206 such as e.g. 1, 2, 3, 4, 5, and so on.

A reference video frame generator 211 may be configured to receive each of the unique identifiers 206 and to generate a reference video frame 207 having a video representation of the received unique identifier 206. These video representations may be similar to the binary representations based of arrays of black and white cells described with reference to Figure 1.

Alternatively to these arrays of black and white cells, other approaches may be used for representing the unique identifiers 206 in the reference video frames 207. For example, QR codes or bar codes could be used instead of said black and white binary representation.

A redundancy generator 202 may be configured to receive each of the reference video frames 207 from the reference video frame generator 211, and to enrich them by adding redundant data for recovering purposes in case of data corruption. This redundancy generator 202 may be based on e.g. a Reed-Solomon algorithm or similar Error Correcting Code, so that enriched reference video frames 208 are produced.

A reference audio sequence generator 204 may be configured to receive each of the unique identifiers 206 (from the unique identifier generator 200) and to generate reference audio sequences 210 each including an audio representation of the unique identifier 206. In some examples, said audio representation may be generated by using an algorithm defining a correspondence between quantified characteristics of the reference audio sequence 210 and the unique identifier 206.

For example, a set of maximum length sequences (MLSs) may be generated by using two linear bit shift registers (LFSR), one of them with a fixed seed and the other with a seed connected with the corresponding unique identifier 113. The linear combination of the two LFSRs may create different MLSs that bijectively associate with the unique identifiers.

A master clock 205 may have the function of generating a clock signal 209 aimed at synchronizing the generation of reference video frames 208 and the generation of reference audio sequences 210. This synchronization may mean that each pair of reference video frame 208 and its associated reference audio sequence 210 (i.e. "sharing" the same unique identifier 206) is generated simultaneously.

A transmitter 203 may be configured to receive each pair of simultaneously generated reference video frame 208 and associated reference audio sequence 210, and to transmit them to a corresponding audio-visual transmission chain. This transmission may be performed in such a way that the reference video frames 208 and reference audio sequences 210 are directly included in an audio-visual transmission signal to be synchronized.

Figure 3 is a schematic illustration of a synchronism under which a reference audio signal 302 and a reference raster image signal 301 may be reproduced in an audio-visual device (not shown) by a system similar to the one illustrated by Figure 1.

Five reference audio sequences (Seq_1 to Seq_5) of the reference audio signal 302 and five reference raster image frames (Frame_1 to Frame_5) of the reference raster image signal 301 are shown. A one-to-one (or bijective) association may exist between the reference audio sequences and the reference raster image frames implemented via unique identifiers from a series of unique identifiers.

The series of unique identifiers may represent e.g. the position of the reference audio sequences in the reference audio signal 302 and, accordingly, the position of the reference raster image frames in the reference raster image signal 301. For example, Frame_1 and Seq_1 may be associated with each other by their first position (unique identifier = 1), Frame_2 and Seq_2 may be associated with each other by their second position (unique identifier = 2), and so on.

A time axis 300 is also shown as a reference representing a clock signal used to synchronize certain reproductions so as to be performed simultaneously. Vertical lines of the time axis 300 indicate the start of reference raster image frames and/or reference audio sequences. The reference audio sequences may be reproduced through a loudspeaker of the audio-visual device, and the reference raster image frames may be rasterized on a display or screen of the audio-visual device.

The reference raster image signal 301 may be seen as a series of pairs formed by a first reference raster image frame and an immediately subsequent reference raster image frame in the reference raster image signal 301. The first pair would be formed by Frame_1 as the first frame and Frame_2 as the immediately subsequent frame, the second pair would be formed by Frame_2 as the first frame and Frame_3 as the immediately subsequent frame, and so on.

For the sake of simplicity the synchronization under which the reference frames and audio sequences may be reproduced will be explained in detail only for the pair formed by Frame_1 and Frame_2. Any skilled person will appreciate, however, that the same principles and/or rules, described below, could be similarly applied to the subsequent pairs of frames: Frame_2 and Frame_3, Frame_3 and Frame_4, and so on.

A first rasterization 303 and a second rasterization 304 of Frame_1 may be performed on one of an upper and a lower region of the display or screen. In the particular example shown, said two rasterizations 303, 304 are performed on the upper region of the display. A single reproduction 307 of the audio sequence Seq_1, which is bijectively associated with Frame_1, may be performed substantially simultaneously with the first rasterization 303 of Frame_1 during time interval 309.

A first rasterization 305 and a second rasterization 306 of Frame_2 may be performed on the other of the upper and the lower region of the display. In the particular example shown, said two rasterizations 305, 306 are performed on the lower region of the display. A single reproduction 308 of the audio sequence Seq_2, which is bijectively associated with Frame_2, may be performed substantially simultaneously with the first rasterization 305 of Frame_2 during time interval 310.

Furthermore, the second rasterization 304 of Frame_1 may be performed substantially simultaneously with the first rasterization 305 of Frame_2.

As commented in other parts of the description, the reproduction of the reference raster image frames and the reference audio sequences may be captured by e.g. a camera with microphone, in such a way that said captured reference raster image frames and reference audio sequences are included in an audio-visual transmission signal to be synchronized.

In some circumstances, the camera may start scanning 311 after the start of the first rasterization 303 of Frame_1, so that a part 312 of the rasterization 303 of Frame_1 may not be scanned (by the camera). Reproducing the reference raster image frames in the manner illustrated by Figure 3 (or similar) may permit a full scan of Frame_1 even though the scan 311 is initiated (by the camera) after the start of the first rasterization 303 of Frame_1. In particular, Figure 3 illustrates that a first part 313 of Frame_1 may be scanned during the first rasterization 303 of Frame_1 and a second part 314 of Frame_1 may be scanned during the second rasterization 304 of Frame_1.

For the sake of simplicity, this effect that permits full scan of a frame has been explained with reference to Frame_1, but it is clear that said explanation can be easily extended to any of the other frames of the reference raster image signal 301.

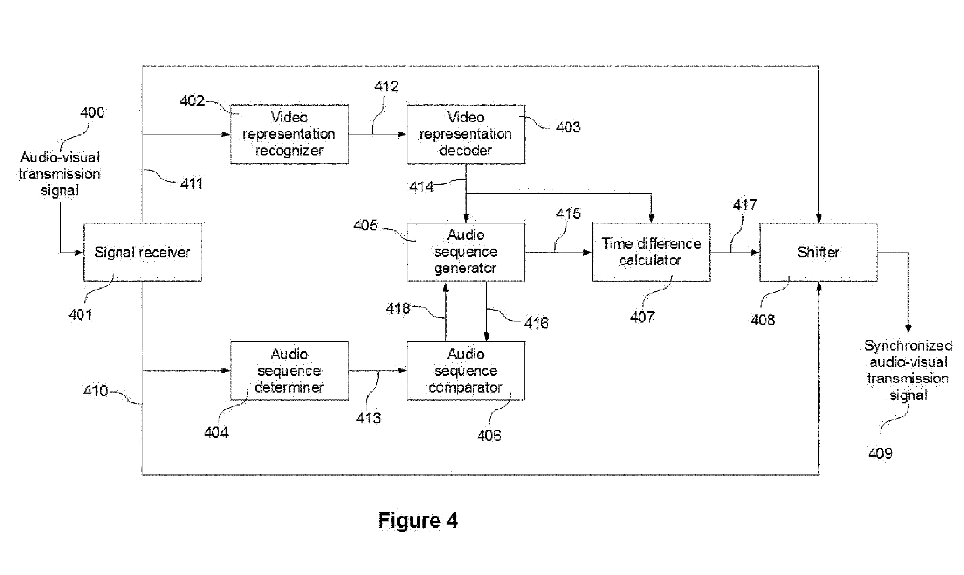

Figure 4 is a block diagram schematically illustrating a system for automatically synchronizing an audio component and a video component of an audio-visual transmission signal 400 according to an example. The audio-visual transmission signal 400 may comprise reference video and audio signals either from a system similar to the one of Figure 2, or from a camera that has captured reference raster image frames and reference audio sequences reproduced by a system similar to the one of Figure 1.

The unique identifier of each of the reference audio sequences may represent the position of the reference audio sequence in the reference audio signal, and the unique identifier of each of the reference video frames may represent the position of the reference video frame in the reference video signal.

A signal receiver 401 may have the function of receiving the audio-visual transmission signal 400 and splitting it into audio component 410 (including the reference audio signal) and video component 411 (including the reference video signal).

A video representation recognizer 402 may be configured to receive the video component 411, and to compute reference video frames included in the video component 411 to determine the video representation of the unique identifier of each reference video frame. This computation may comprise converting the reference video frames into reference raster image frames 412.

The computation of the reference video frames may comprise decimation of the frames which is aimed at reducing the (usually big) amount of data contained in the video frames according to corresponding standard video format. For example, video frames in HD video format may contain especially big amounts of data that may not be required in its whole for the purpose of recognizing the video representations of unique identifiers.

The decimation process may produce raster image frames which may be subsequently binarized by converting colour pixels into grey scale pixels and, then, into binary values. Each of said binary values may indicate whether the grey scale pixel has either white or near white colour (in which case the binary value may be 1) or black or near black colour (in which case the binary value may be 0).

Then, the binarized frame may be processed by a pattern detector with the purpose of delimiting a set of contiguous binary pixels that may likely correspond to a predefined pattern of a representation of unique identifier. In the case that the reference video signal was produced by a camera from a system of the type shown in Figure 1, some perspective distortion may exist in the frames due to a deficient parallelism between the capture plane of the camera and the plane of the screen. Taking this into account, the binarized frame with detected pattern may be processed by a perspective transformer in order to eliminate or attenuate any perspective distortion(s) that may exist in the frames.

A video representation decoder 403 may be configured to receive the reference raster image frames 412 (from the video representation recognizer 402), and to obtain the unique identifier represented in each of said reference raster image frames 412. Since data corruption may have occurred during transmission, a Reed-Solomon algorithm or similar Error Correcting Code algorithm may be used for reconstruction of the reference raster image frames 412. Once reconstructed, the reverse of a process similar to the one implemented by the raster image frame generators 102,105 (of Figure 1) may be applied to each of the reference raster image frames 412 to obtain the represented unique identifier 414.

An audio sequence generator 405 may be adapted to receive the unique identifier 414 from the video representation decoder 403 and to generate an audio sequence 416 associated with the unique identifier 414. This audio sequence generator 405 may be similar to the audio sequence generator 109 (of Figure 1) and/or to the audio sequence generator 204 (of Figure 2).

An audio sequence determiner 404 may be configured to receive the audio component 410 of the audio-visual transmission signal 400, and to determine reference audio sequences included in the audio component 410. The audio sequence determiner 404 may be further configured to output the determined reference audio sequence 413.

An audio sequence comparator 406 may be configured to receive the audio sequence 416 (from the audio sequence generator 405) and the audio sequence 413 (from the audio sequence determiner 404) and to compute both of them. This computation of the received audio sequences 416, 413 may comprise comparing the audio sequences 416, 413 and determining a similarity level. In the case that this similarity level is not considered high enough (e.g. less than a similarity threshold), an indication of validity 418 with failed state may be transferred to the audio sequence generator 405. In the case that this similarity level is considered high enough (e.g. greater than a similarity threshold), an indication of validity 418 with successful state may be transferred to the audio sequence generator 405.

The comparison between the received audio sequences 416, 413 may be implemented by a cross correlation algorithm, for example.

The audio sequence generator 405 may be further configured to receive the indication of validity 418 from the audio sequence comparator 406 and to evaluate the state of said indication 418. This evaluation may comprise generating a next audio sequence 416, if the indication of validity 418 has failed state, such that said next audio sequence 416 is processed by the audio sequence comparator 406 according to the principles/rules explained before.

On the other hand, if the indication of validity 418 has successful state, it means that the last generated audio sequence has caused a high enough similarity with the reference audio sequence 413 from the audio-visual transmission signal 400. Therefore, in this case, the unique identifier of said last generated audio sequence may be outputted 415, by the audio sequence generator 405, as the unique identifier of the reference audio sequence 413.

A time difference calculator 407 may be configured to receive the unique identifier of the reference raster image frame 414 and the unique identifier of the reference audio sequence 415, and to calculate a difference between them. If this difference is substantially equal to zero, it means that there is no desynchronization between the audio and video components of the audio-visual transmission signal 400. If this difference is equal to a number of frames greater than zero, it means that the time difference may be calculated by multiplying the obtained number of frames by the duration of a frame. This time difference may be outputted as a shift amount 417 to be performed for synchronizing the audio and video components of the audio-visual transmission signal 400.

A shifter 408 may be configured to receive the shift amount 417 from the time difference calculator 407, and to perform said shift amount 417 to generate the synchronized audio-visual transmission signal 409.

In some examples, a visualizer (not shown) may be configured to show the shift amount 417 for validation by an operator. The visualizer may be further configured to receive a confirmation/rejection by the operator, and to cause either operation of the shifter 408 in case of confirmation or by-pass of the shifter 408 in case of rejection.

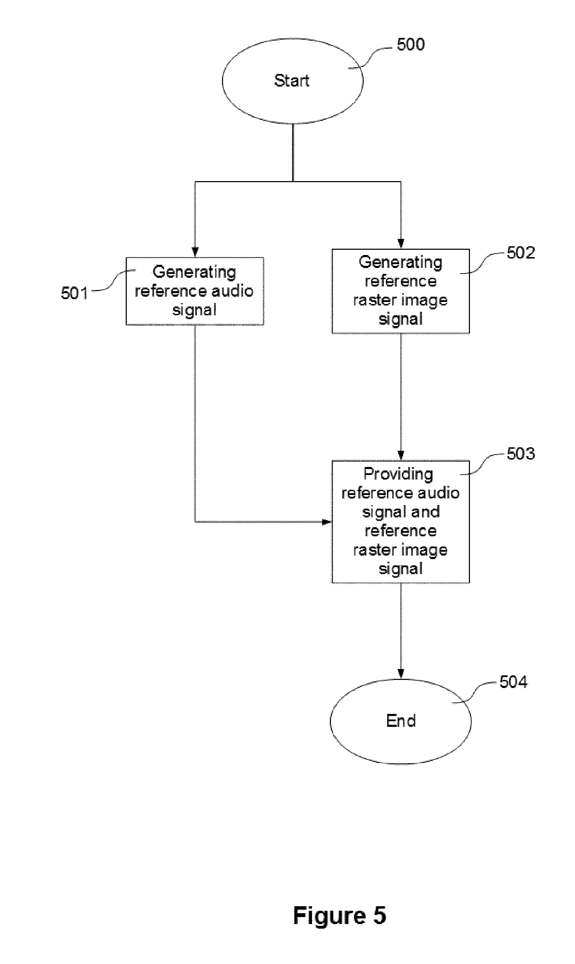

Figure 5 is a flow chart schematically illustrating an example of a method of providing a reference audio signal and a reference raster image signal for inclusion in an audio-visual transmission signal in such a way as an audio component and a video component of the audio-visual transmission signal to be automatically synchronized at an end-to-end audio-visual transmission chain.

The method of Figure 5 may be initiated at a start block 500 which may be triggered upon detection of a request from an operator, for example.

At block 501, a reference audio signal may be generated comprising one or more reference audio sequences each including an audio representation of a unique identifier from a series of unique identifiers.

At block 502, a reference raster image signal may be generated comprising one or more reference raster image frames each including a raster image representation of the unique identifier, respectively, in such a way as to be bijectively associated with the one or more reference audio sequences.

At block 503, the reference audio signal and the reference raster image signal may be provided in such a way that each of the reference audio sequences substantially coincide with the respective bijectively associated reference raster image frame.

At block 504, the method may end its execution.

The method of Figure 5 may be performed by a system similar to the one shown by Figure 1.

The generation of the reference audio signal (block 501) may be performed by the unique identifier generator 100, the master clock 101, and the audio sequence generator 109, in accordance with the principles/rules described in relation to Figure 1.

The generation of the reference raster image signal (block 502) may be performed by the unique identifier generator 100, the master clock 101, the first and second raster image frame generators 102, 105, and the first and second redundancy generators 103, 106, in accordance with the principles/rules described in relation to Figure 1.

The provision of the reference signals (block 503) may be performed by the audio sequence reproductor 110 and the first and second rasterizers 104, 107, in accordance with the principles/rules described in relation to Figure 1. The audio sequence reproductor 110 provides the reference audio signal by reproducing it on the loudspeaker 111. The first and second rasterizers 104, 107 provide the reference raster image signal by reproducing/rasterizing it on the screen 108.

The method of Figure 5 may also be performed by a system similar to the one shown by Figure 2.

The generation of the reference audio signal (block 501) may be performed by the unique identifier generator 200, the master clock 205, and the audio sequence generator 204, in accordance with the principles/rules described in relation to Figure 2.

The generation of the reference raster image signal (block 502) may be performed by the unique identifier generator 200, the master clock 205, the video frame generator 211, and the redundancy generator 202, in accordance with the principles/rules described in relation to Figure 2.

The provision of the reference signals (block 503) may be performed by the transmitter 203, in accordance with the principles/rules described in relation to Figure 2.

In the various examples proposed herein, systems have been described (with reference to Figures 1 - 4) in terms of modules and connections between them for the sake of clarity. In alternative examples, some of the described modules may be integrated in a single module. These modules and connections may be implemented physically. Nevertheless, in alternative implementations, the functionalities performed by said modules and connections may also be implemented logically by e.g. suitably programming a programmable control unit, such as e.g. a PLC (Programmable Logic Controller). A module may be defined as a piece of hardware and/or software implementing one or more functionalities.

All or some of the proposed modules may comprise electronic/computing means. These electronic/computing means may be used interchangeably; that is, a part of said means may be electronic means and the other part may be computing means, or all said means may be electronic means or all said means may be computing means.

The electronic means may comprise e.g. a programmable electronic device such as a CPLD (Complex Programmable Logic Device), an FPGA (Field Programmable Gate Array) or an ASIC (Application-Specific Integrated Circuit).

The computing means may comprise a computing device that may comprise a memory and a processor. The memory may be configured to store a series of computer program instructions constituting any of the computer programs proposed herein. The processor may be configured to execute these instructions stored in the memory in order to generate the various events and actions for which the system has been programmed.

The computer program (which may be stored in the memory of the system) may comprise program instructions for causing the system to perform any of the methods described in the context of the previous examples. The computer program may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the method. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

Although only a number of particular examples have been disclosed herein, it will be understood by those skilled in the art that other alternative examples and/or uses and obvious modifications and equivalents thereof are possible. Furthermore, the disclosure covers all possible combinations of the particular examples described. Thus, the scope of the disclosure should not be limited by particular examples.

Further, although the examples described with reference to the drawings comprise computing apparatus/systems and processes performed in computing apparatus/systems, the disclosure also extends to computer programs, particularly computer programs on or in a carrier, adapted for putting the system into practice.

## Claims

1. A method of providing a reference audio signal and a reference raster image signal for inclusion in an audio-visual transmission signal in such a way as an audio component and a video component of the audio-visual transmission signal to be automatically synchronized at an end-to-end audio-visual transmission chain, the method comprising
generating the reference audio signal comprising one or more reference audio sequences each including an audio representation of a unique identifier from a series of unique identifiers;
generating the reference raster image signal comprising one or more reference raster image frames each including a raster image representation of the unique identifier, respectively, in such a way as to be bijectively associated with the one or more reference audio sequences; and
providing the reference audio signal and the reference raster image signal in such a way that each of the reference audio sequences substantially coincide with the respective bijectively associated reference raster image frame.

2. A method of providing a reference audio signal and a reference raster image signal according to claim 1, wherein the reference audio signal is a continuous pseudo random audio signal.

3. A method of providing a reference audio signal and a reference raster image signal according to any of claims 1 or 2, wherein
each of the reference audio sequences comprises quantified characteristics uniquely identifying the reference audio sequence; and wherein
the audio representation of the unique identifier included in each of the reference audio sequences is implemented via a data structure or an algorithm defining an equivalence between the quantified characteristics of the reference audio sequence and the unique identifier.

4. A method of providing a reference audio signal and a reference raster image signal according to any of claims 1 to 3, wherein each of the reference raster image frames comprises redundant data for recovering at least part of its raster image representation of the unique identifier in case of data corruption.

5. A method of providing a reference audio signal and a reference raster image signal according to any of claims 1 to 4, wherein
the one or more reference audio sequences is a series of reference audio sequences having predetermined positions, and the unique identifier represented in each of the reference audio sequences is the position of the reference audio sequence in the series of reference audio sequences; and wherein
the one or more reference raster image frames is a series of reference raster image frames having predetermined positions, and the unique identifier represented in each of the reference raster image frames is the position of the reference raster image frame in the series of reference raster image frames.

6. A method of providing a reference audio signal and a reference raster image signal according to any of claims 1 to 5, wherein providing the reference audio signal and the reference raster image signal comprises
reproducing the reference audio signal and the reference raster image signal in an audio-visual device in such a way so as the reference audio signal and the reference raster image signal to be captured by a capturing device configured to generate the audio-visual transmission signal including the captured reference audio signal and reference raster image signal.

7. A method of providing a reference audio signal and a reference raster image signal according to claim 6, wherein
the one or more reference raster image frames is a series of reference raster image frames; wherein
the audio-visual device comprises a loudspeaker and a display having a first region and a second region; and wherein
reproducing the reference audio signal and the reference raster image signal comprises, for each pair formed by a first reference raster image frame and an immediately subsequent reference raster image frame in the series of reference raster image frames:
a first and a second rasterization of the first reference raster image frame on one of the first and second regions of the display, and a single reproduction of its bijectively associated reference audio sequence through the loudspeaker; and
a first and a second rasterization of the immediately subsequent reference raster image frame on the other of the first and second regions of the display, and a single reproduction of its bijectively associated reference audio sequence through the loudspeaker; wherein
the first rasterization of the first reference raster image frame is performed substantially simultaneously with the single reproduction of its bijectively associated reference audio sequence,
the first rasterization of the immediately subsequent reference raster image frame is performed substantially simultaneously with the single reproduction of its bijectively associated reference audio sequence, and
the second rasterization of the first reference raster image frame is performed substantially simultaneously with the first rasterization of the immediately subsequent reference raster image frame.

8. A method of providing a reference audio signal and a reference raster image signal according to any of claims 6 or 7, wherein the rasterizations are performed with a rasterization frequency at least 32 times greater than a scanning frequency of the capturing device.

9. A method of providing a reference audio signal and a reference raster image signal according to any of claims 1 to 5, wherein
the reference raster image signal is a reference video signal and the reference raster image frames are reference video frames; and wherein
providing the reference audio signal and the reference raster image signal comprises
transmitting the reference audio signal and the reference video signal to the audio-visual transmission chain in such a way that the reference audio signal and the reference video signal are included in the audio-visual transmission signal.

10. A computer program product comprising program instructions for causing a computer to perform a method of providing a reference audio signal and a reference raster image signal according to any of claims 1 to 9.

11. A system for providing a reference audio signal and a reference raster image signal for inclusion in an audio-visual transmission signal in such a way as an audio component and a video component of the audio-visual transmission signal to be automatically synchronized at an end-to-end audio-visual transmission chain, the system comprising
a first generator module for generating the reference audio signal comprising one or more reference audio sequences each including an audio representation of a unique identifier from a series of unique identifiers;
a second generator module for generating the reference raster image signal comprising one or more reference raster image frames each including a raster image representation of the unique identifier, respectively, in such a way as to be bijectively associated with the one or more reference audio sequences; and
a provider module for providing the reference audio signal and the reference raster image signal in such a way that each of the reference audio sequences substantially coincide with the respective bijectively associated reference raster image frame.

12. A method of automatically synchronizing an audio component and a video component of an audio-visual transmission signal at an end-to-end audio-visual transmission chain, wherein the audio-visual transmission signal includes a reference audio signal and a reference raster image signal, the method comprising
receiving the audio-visual transmission signal;
determining, in the reference audio signal included in the audio-visual transmission signal, a reference audio sequence including an audio representation of a unique identifier from a series of unique identifiers;
determining, in the reference raster image signal included in the audio-visual transmission signal, a reference raster image frame including a raster image representation of the unique identifier; and
determining a time difference between a start of the determined reference audio sequence and a start of the determined reference raster image frame, or between an end of the determined reference audio sequence and an end of the determined reference raster image frame.

13. A method of automatically synchronizing an audio component and a video component of an audio-visual transmission signal according to claim 12, further comprising
shifting the audio component and/or the video component relative to each other to offset the determined time difference.

14. A computer program product comprising program instructions for causing a computer to perform a method of automatically synchronizing an audio component and a video component of an audio-visual transmission signal according to any of claim 12 or 13.

15. A system for automatically synchronizing an audio component and a video component of an audio-visual transmission signal at an end-to-end audio-visual transmission chain, wherein the audio-visual transmission signal includes a reference audio signal and a reference raster image signal, the system comprising
a receiver module for receiving the audio-visual transmission signal;
a first determiner module for determining, in the reference audio signal included in the audio-visual transmission signal, a reference audio sequence including an audio representation of a unique identifier from a series of unique identifiers;
a second determiner module for determining, in the reference raster image signal included in the audio-visual transmission signal, a reference raster image frame including a raster image representation of the unique identifier; and
a third determiner module for determining a time difference between a start of the determined reference audio sequence and a start of the determined reference raster image frame, or between an end of the determined reference audio sequence and an end of the determined reference raster image frame.
